# EUROPEAN PATENT APPLICATION

(11) **EP 4 764 678 A1**
(43) Date of publication of application: **24.06.2026**
(21) Application number: 24876153.8
(22) Date of filing: 16.07.2024
(51) Int. Cl.: G02F 1/035, G02F 1/03

(54) **Y-TYPE THIN-FILM LITHIUM NIOBATE ELECTRO-OPTIC MODULATOR AND MANUFACTURING METHOD THEREFOR**

(30) Priority: 08.10.2023 CN 202311301283
(71) Applicant: Accelink Technologies Co., Ltd., Wuhan, Hubei 430000 (CN)
(72) Inventor: YU, Qianchen, Wuhan, Hubei 430000 (CN); LIANG, Xuerui, Wuhan, Hubei 430000 (CN); ZHANG, Yu, Wuhan, Hubei 430000 (CN); CHEN, Honggang, Wuhan, Hubei 430000 (CN); ZHANG, Bo, Wuhan, Hubei 430000 (CN); LUO, Yong, Wuhan, Hubei 430000 (CN); MA, Weidong, Wuhan, Hubei 430000 (CN); HU, Qianggao, Wuhan, Hubei 430000 (CN); CHEN, Xun, Wuhan, Hubei 430000 (CN); YAN, Wei, Wuhan, Hubei 430000 (CN)
(74) Representative: Patentgruppen A/S
(86) International application number: PCT/CN2024/105730
(87) International publication number: WO 2025/077332

(57) **Abstract**

Provided in the present application are a Y-shaped thin-film lithium niobate electro-optic modulator and a manufacturing method therefor. A lithium niobate layer on an electro-optic modulator chip is etched to form corresponding curved waveguide structures, and the two curved waveguide structures are symmetrically arranged on two sides of a Y-shaped waveguide structure, such that it is ensured that two optical paths have a consistent height. While ensuring a waveguide length, the curved waveguide structures reduce the size of the space required by waveguides. For the waveguides with the same length, chips with smaller dimensions can be configured for mounting. Moreover, a signal electrode and a ground electrode are disposed on two sides of each straight waveguide of the curved waveguide structures to modulate optical signals in the waveguides, thereby meeting the modulation requirement of the electro-optic modulator.

## Description

### CROSS REFERENCE

This application claims priority to Chinese patent application No. 202311301283.9 filed on 8 October 2023, entitled "Y-shaped thin-film lithium niobate electro-optic modulator and manufacturing method therefor", the entire disclosure of which is incorporated herein by reference.

### TECHNICAL FIELD

The present application relates to the field of integrated optics, and more particularly, to a Y-shaped thin-film lithium niobite (TFLN) electro-optic modulator and a method for manufacturing the same.

### BACKGROUND

Electro-optic modulation enables long-distance, low-loss information transmission by superimposing electrical signals onto optical signals, forming the backbone of modern communication networks. Thin-film lithium niobite (TFLN) materials exhibit significant potential in the field of electro-optic modulation due to their combination of high integration with excellent electro-optic coefficients, enabling the fabrication of low-power, compact electro-optic modulation devices. Conventional TFLN structures typically employ X-cut lithium niobate thin films, with electrodes generally positioned on both sides of the waveguide to align the electric field with the optical axis-maximizing the electro-optic coefficient and modulation efficiency. However, this configuration requires co-locating optical and electrical structures on the chip surface, necessitating consideration of a plurality of crosstalk factors of and the spatial footprint of optical and electrical structures.

Thus, surmounting the limitations of existing technologies is a critical bottleneck that must be resolved to drive progress in this technical field.

### SUMMMARY

The technical problem addressed by the present application is to provide an arrangement of waveguide structures and electrodes for an electro-optic modulator that reduces the spatial footprint of said structures and electrodes, while maintaining alignment between the electric field direction and the optical axis.

The present application adopts the following technical solutions.

In a first aspect, there is provided a Y-shaped thin-film lithium niobate electro-optic modulator comprising a lithium niobate layer 1, an electrode arrangement 2, and an oxide layer 3, wherein:
the lithium niobate layer 1 is disposed on the oxide layer 3;
the lithium niobate layer 1 comprises a first Y-shaped waveguide structure 11 and two curved waveguide structures 12, the two curved waveguide structures 12 being symmetrically arranged on opposite sides of the first Y-shaped waveguide structure 11 and connected thereto;
each curved waveguide structure 12 comprises a plurality of straight waveguides 121 and a plurality of curved waveguides 122, wherein the straight waveguides 121 are arranged parallel to one another, and adjacent straight waveguides 121 are connected end-to-end via the curved waveguides 122 to form a continuous series connection of all straight waveguides 121 within the same curved waveguide structure 12; and
the electrode arrangement 2 is located on the lithium niobate layer 1 and comprises signal electrodes 21 and ground electrodes 22, each straight waveguide (121) having a signal electrode (21) and a ground electrode (22) disposed on opposite sides, parallel to the straight waveguide (121), ensuring ensure that a direction of an electric field generated by the ground electrode 22 and signal electrode 21 is perpendicular to a longitudinal axis of the straight waveguide 121.

Preferably, the Y-shaped thin-film lithium niobate electro-optic modulator further comprises a substrate 4 and a buffer layer 5, wherein:
the substrate 4 is disposed beneath the oxide layer 3;
the buffer layer 5 is interposed between the lithium niobate layer 1 and the electrode arrangement 2.

Preferably, the first Y-shaped waveguide structure 11 comprises a first main waveguide 111 and two first branch waveguides 112, wherein:
the first main waveguide 111 is connected to each of the two first branch waveguides 112;
one first branch waveguide 112 is connected to one curved waveguide structure 12, and the other first branch waveguide 112 is connected to the other curved waveguide structure 12.

Preferably, the feature that adjacent straight waveguides 121 are connected end-to-end via the curved waveguides 122 to form a continuous series connection of all straight waveguides 121 within the same curved waveguide structure 12, specifically comprises:
each curved waveguide structure 12 comprises a plurality of straight waveguides 121, numbered sequentially from a first straight waveguide 121 to a j-th straight waveguide 121 based on their distance from the first Y-shaped waveguide structure 11, where j>1 and j is an odd integer;
for the first straight waveguide 121, a first end is connected to the first Y-shaped waveguide structure 11, and a second end is connected to the second straight waveguide 121 via a corresponding curved waveguide 122;
for the j-th straight waveguide 121, a first end is connected to the (j-1)-th straight waveguide 121 via a corresponding curved waveguide 122, and a second end is configured for optical signal output;
for straight waveguides 121 other than the first and j-th straight waveguides 121, each of two ends is connected to an adjacent straight waveguide 121 via a corresponding curved waveguide 122.

Preferably, the signal electrodes 21 are divided into two sets disposed on opposite sides of the first Y-shaped waveguide structure 11, each set comprising a plurality of signal electrodes numbered sequentially from a first signal electrode 21 to a j-th signal electrode 21 based on their distance from the first Y-shaped waveguide structure 11, where j>1 and j is an odd integer;
for the first signal electrode 21, a first end is configured to receive electrical signals, and a second end is connected to the second signal electrode 21;
for the j-th signal electrode 21, a first end is connected to the (j-1)-th signal electrode 21, and a second end is configured for electrical signal output;
for signal electrodes 21 other than the first and j-th signal electrodes 21, each of two ends is connected to an adjacent signal electrode 21 via a curved electrode.

Preferably, the ground electrodes 22 are divided into two sets disposed on opposite sides of the first Y-shaped waveguide structure 11, each set comprising a plurality of ground electrodes numbered sequentially from a first ground electrode 22 to a j-th ground electrode 22 based on their distance from the first Y-shaped waveguide structure 11, where j>1 and j is an odd integer;
adjacent ground electrodes 22 are connected via connectors 6; and for any ground electrode 22 that connects two connectors 6, the two connectors 6 are disposed at opposite ends of the corresponding ground electrode 22.

Preferably, the lithium niobate layer 1 further comprises a second Y-shaped waveguide structure 13, disposed opposite to the first Y-shaped waveguide structure 11, the second Y-shaped waveguide structure 13 comprising a second main waveguide 131 and two second branch waveguides 132, wherein:
the second main waveguide 131 is connected to each of the two second branch waveguides 132; and
one of the two second branch waveguides 132 is connected to one outermost straight waveguide 121, and the other second branch waveguide 132 is connected to the other outermost straight waveguide 121.

Preferably, the signal electrodes 21 are numbered sequentially from a first signal electrode 21 to a (2j-1)-th signal electrode 21, where j>1 and j is an odd integer;
for the first signal electrode 21, a second end is configured for electrical signal input, and a first end is connected to the second signal electrode 21;
for the (2j-1)-th signal electrode 21, a first end is configured for electrical signal output, and a second end is connected to the (2j-2)-th signal electrode 21;
for signal electrodes 21 other than the first and (2j-1)-th signal electrodes 21, each end is connected to an adjacent signal electrode 21 via a curved electrode.

Preferably, the ground electrodes 22 are numbered sequentially from a first ground electrode 22 to a 2j-th ground electrode 22, where j>1 and j is an odd integer;
for the first ground electrode 22, a first end is connected to the second ground electrode 22 via a connector 6;
for the 2j-th ground electrode 22, a first end is connected to the (2j-1)-th ground electrode 22 via a connector 6;
for ground electrodes 22 other than the first and 2j-th ground electrodes 22, each end is connected to an adjacent connector 6 via a connector 6.

In a second aspect, there is provided a method for manufacturing a Y-shaped thin-film lithium niobate electro-optic modulator, applied to the Y-shaped thin-film lithium niobate electro-optic modulator as defined in the first aspect, comprising:
depositing the lithium niobate layer 1 on the oxide layer 3, and etching the lithium niobate layer 1 to form a first Y-shaped waveguide structure 11 and two curved waveguide structures 12, the two curved waveguide structures 12 being symmetrically disposed on opposite sides of the first Y-shaped waveguide structure 11 and connected thereto; each curved waveguide structure 12 comprising a plurality of straight waveguides 121 and a plurality of curved waveguides 122, wherein the plurality of straight waveguides 121 are arranged parallel to one another, and adjacent straight waveguides 121 are connected end-to-end via the curved waveguides 122 to form a continuous series connection of all straight waveguides 121 within the same curved waveguide structure 12; and
forming the electrode arrangement 2 on the lithium niobate layer 1, the electrode arrangement 2 comprising signal electrodes 21 and ground electrodes 22, each disposed on one side of a respective straight waveguide 121, wherein the signal electrodes 21 and ground electrodes 22 are arranged parallel to the straight waveguides 121 to ensure that a direction of an electric field generated by the ground electrode 22 and signal electrode 21 is perpendicular to a longitudinal axis of the straight waveguide 121.

The present application provides a Y-shaped thin-film lithium niobate electro-optic modulator and a method for manufacturing the same. The lithium niobate layer on the electro-optic modulator chip is etched to form corresponding curved waveguide structures, with two curved waveguide structures symmetrically disposed on opposite sides of the Y-shaped waveguide structure to ensure optical path length matching between the two branches. The curved waveguide structure reduces the chip footprint required to achieve a given waveguide length, enabling the integration of longer waveguides on smaller chips. Simultaneously, signal electrodes and ground electrodes are disposed on opposite sides of each straight waveguide in the curved waveguide structure to modulate optical signals propagating therein, thereby meeting the modulation requirements of the electro-optic modulator.

### BRIEF DESCRIPTION OF THE DRAWINGS

In order to more clearly illustrate the technical solution of the embodiments of the present application, a brief introduction will be given below to accompanying drawings required for use in the embodiments of the present application. It is obvious that accompanying drawings described below are only some embodiments of the present application. For those skilled in the art, other drawings can be obtained based on these drawings without creative labor.
FIG. 1 is a top view of a partial structure of a Y-shaped thin-film lithium niobate electro-optic modulator provided in an embodiment of the present application;
FIG. 2 is a top view of the lithium niobate layer of a Y-shaped thin-film lithium niobate electro-optic modulator provided in an embodiment of the present application;
FIG. 3 is a top view of the lithium niobate layer of another Y-shaped thin-film lithium niobate electro-optic modulator provided by an embodiment of the present application;
FIG. 4 is a top view of a partial structure of another Y-shaped thin-film lithium niobate electro-optic modulator provided by an embodiment of the present application;
FIG. 5 is a top view of a partial structure of a Y-shaped thin-film lithium niobate electro-optic modulator provided in an embodiment of the present application;
FIG. 6 is a cross-sectional view of a Y-shaped thin-film lithium niobate electro-optic modulator provided in an embodiment of the present application;
FIG. 7 is a top view of the lithium niobate layer of a Y-shaped thin-film lithium niobate electro-optic modulator provided in an embodiment of the present application;
FIG. 8 is a top view of the lithium niobate layer of another Y-shaped thin-film lithium niobate electro-optic modulator provided by an embodiment of the present application;
FIG. 9 is a top view of a partial structure of another Y-shaped thin-film lithium niobate electro-optic modulator provided by an embodiment of the present application;
FIG. 10 is a top view of a partial structure with the optical transmission paths of a Y-shaped thin-film lithium niobate electro-optic modulator provided by an embodiment of the present application;
FIG. 11 is a top view of a partial structure of another Y-shaped thin-film lithium niobate electro-optic modulator provided by an embodiment of the present application;
FIG. 12 is a cross-sectional view of another Y-shaped thin-film lithium niobate electro-optic modulator provided by an embodiment of the present application;
FIG. 13 is a cross-sectional view of another Y-shaped thin-film lithium niobate electro-optic modulator provided by an embodiment of the present application;
FIG. 14 is a top view of a partial structure of a Y-shaped thin-film lithium niobate electro-optic modulator provided in an embodiment of the present application;
FIG. 15 is a top view of a partial structure of a Y-shaped thin-film lithium niobate electro-optic modulator provided in an embodiment of the present application;
FIG. 16 is a top view of a partial structure with optical transmission paths of a Y-shaped thin-film lithium niobate electro-optic modulator provided in an embodiment of the present application;
FIG. 17 is a top view of a partial structure with optical transmission paths of another Y-shaped thin-film lithium niobate electro-optic modulator provided by an embodiment of the present application;
FIG. 18 is a flowchart of a method for manufacturing a Y-shaped thin-film lithium niobate electro-optic modulator provided in an embodiment of the present application;

### List of reference signs

lithium niobate layer 1; first Y-shaped waveguide 11; first main waveguide 111; first branch waveguide 112; curved waveguide structure 12; straight waveguide 121; curved waveguide 122; second Y-shaped waveguide structure 13; second main waveguide 131; second branch waveguide 132; electrode arrangement 2; signal electrode 21; ground electrode 22; oxide layer 3; substrate 4; buffer layer 5; connector 6.

### DETAILED DESCRIPTION

In order to further clarify the purpose, technical solution, and advantages of the present application, the following will provide a detailed explanation of the present application in conjunction with accompanying drawings and embodiments. It should be noted that the specific embodiments described herein are only configured to explain the present application and are not intended to limit the present application.

In the description of the present application, the terms "inside", "outside", "longitudinal", "transverse", "up", "down", "top", "bottom", etc. indicate orientation or positional relationships based on the orientation or position relationships shown in accompanying drawings, only for the convenience of describing the present application and not to require the present application to be constructed and operated in a specific orientation, and therefore should not be understood as limiting the present application.

The terms "first", "second", etc. used in the present application are for descriptive purposes only and should not be understood as indicating or implying relative importance or implying the number of technical features indicated. Thus, features limited to "first", "second", etc. may explicitly or implicitly include one or more of these features. In the description of this application, unless otherwise specified, the meaning of "a plurality of" refers to two or more.

In this application, unless otherwise specified and limited, the term "connection" should be broadly understood, for example, "connection" can be a fixed connection, a detachable connection, or a one-piece connection; it can be directly connected or indirectly connected through an intermediate medium. In addition, the term "coupling" can refer to an electrical connection that enables signal transmission.

In addition, the technical features involved in the various embodiments of the present application described below can be combined with each other as long as they do not conflict with each other.

### Embodiment 1

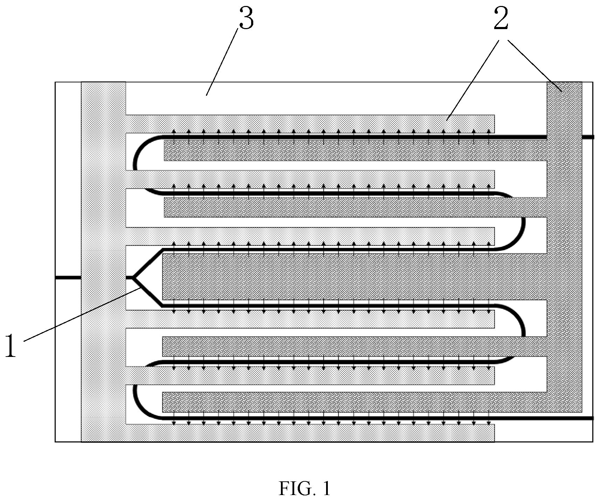

Embodiment 1 of the present application provides a Y-shaped thin-film lithium niobate electro-optic modulator, as illustrated in FIG. 1, comprising a lithium niobate layer 1, an electrode arrangement 2, and an oxide layer 3, wherein:
the lithium niobate layer 1 is disposed on the oxide layer 3; the lithium niobate layer 1 includes a first Y-shaped waveguide structure 11 and two curved waveguide structures 12, the two curved waveguide structures 12 being symmetrically arranged on opposite sides of the first Y-shaped waveguide structure 11 and connected to the first Y-shaped waveguide structure 11.

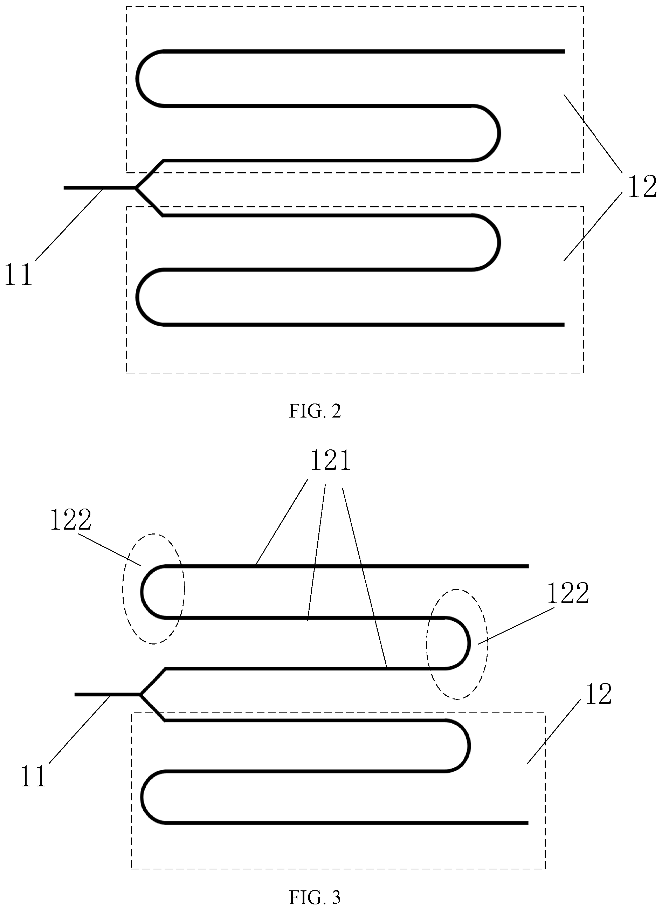

In this embodiment, the lithium niobate layer 1 is first deposited on the oxide layer 3, and then etched into ridge waveguides to form the first Y-shaped waveguide structure 11 and two curved waveguide structures 12. As shown in FIG. 2, the first Y-shaped waveguide structure 11 is the Y-shaped waveguide structure on the left side, and the two curved waveguide structures 12 are symmetrically arranged on opposites sides of the first Y-shaped waveguide structure 11 and connected thereto. In this embodiment, the first Y-shaped waveguide structure 11 is configured for inputting optical signals. An optical signal is first transmitted via the first Y-shaped waveguide structure 11 to the two curved waveguide structures 12, and then propagates outward through said curved waveguide structures 12. This configuration ensures that the two optical paths maintain a consistent height, making the modulator suitable for applications such as integrated optical gyroscopes where uniform optical path height is required.

As shown in FIG. 3, the curved waveguide structure 12 comprises a plurality of straight waveguides 121 and a plurality of curved waveguides 122. The plurality of straight waveguides 121 are arranged parallel to one another, and adjacent straight waveguides 121 are connected end-to-end via the curved waveguides 122 to form a continuous series connection of all straight waveguides 121 within the same curved waveguide structure 12.

In this embodiment, the straight waveguide 121 refers to a straight waveguide segment, whereas the curved waveguide 122 refers to a curved waveguide segment. The plurality of straight waveguides 121 are arranged in a parallel array, with adjacent straight waveguides 121 interconnected by the curved waveguides 122. This configuration maintains the total waveguide length while reducing the waveguide's spatial footprint, thereby eliminating the need for additional chip length.

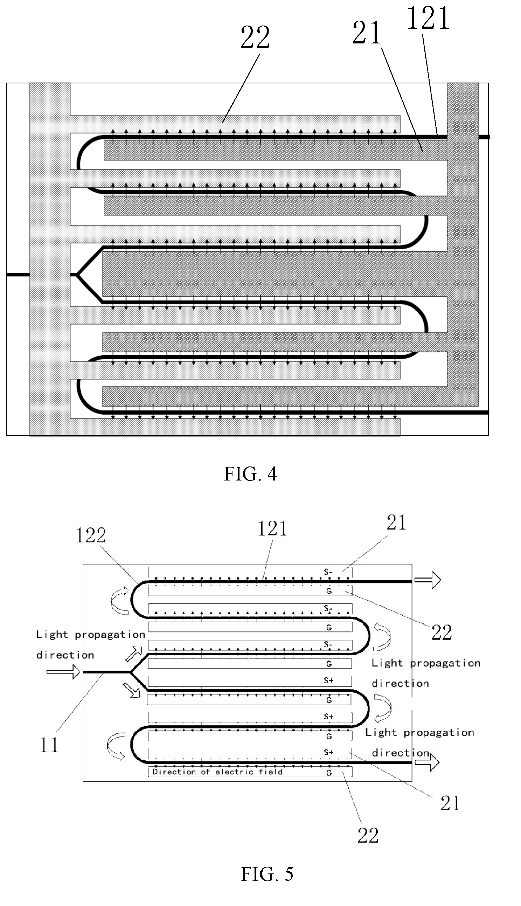

As shown in FIG. 4, the electrode arrangement 2 is located on the lithium niobate layer 1. The electrode arrangement 2 comprises signal electrodes 21 and ground electrodes 22. A ground electrode 22 is arranged on one side of each straight waveguide 121 while a signal electrode 21 is arranged on the other side of each straight waveguide 121, respectively. The signal electrode 21 and the ground electrode 22 are arranged parallel to the straight waveguide 121 to ensure that a direction of an electric field generated by the ground electrode 22 and the signal electrode 21 is perpendicular to a longitudinal axis of the straight waveguide 121.

The electrode arrangement 2 is deposited on the etched lithium niobate layer 1 and the oxide layer 3, and then correspondingly etched to form the signal electrode 21 and the ground electrode 22, respectively. In this embodiment, each straight waveguide 121 is provided with a strip-shaped signal electrode 21 and a strip-shaped ground electrode 22 on opposite sides, and both the signal electrode 21 and the ground electrode 22 are parallel to the straight waveguide 121. The signal electrode 21 and the ground electrode 22 on opposite sides of each straight waveguide 121 generate an electric field, the direction of which is indicated by the black arrow in FIG. 1 and FIG. 4. The direction of the electric field is perpendicular to the longitudinal axes of the signal electrode 21 and the ground electrode 22, and thus is also perpendicular to the longitudinal axis of the straight waveguide 121, thereby modulating the optical signal in the waveguide. This ensures that the direction of the electric field aligns with the direction of the optical axis in the waveguide, meeting the modulation requirements of the electro-optic modulator.

As shown in FIG. 5, white arrows represent the transmission directions of optical signals in the waveguides, and the black arrow represents the direction of electric field.

It is worth mentioning that in this embodiment, the straight waveguides 121 constitute the majority of the curved waveguide structure 12, while the curved waveguides 122 constitute a minor portion. Therefore, for the purposes of optical signal propagation and electro-optic modulation, only the influence of the straight waveguides 121 needs to be considered, whereas the influence of the curved waveguides 122 can be neglected.

In this embodiment, the lithium niobate layer 1 on the electro-optic modulator chip is etched to form the corresponding curved waveguide structures 12, and two curved waveguide structures 12 are symmetrically arranged on opposite sides of the optical signal input and output ports, ensuring that the two optical paths are consistent in height. The curved waveguide structure 12 reduces the space required by the waveguide while maintaining the waveguide length, enabling shorter chips to accommodate waveguides of the same length. At the same time, the signal electrode 21 and the ground electrode 22 are arranged on opposite sides of each straight waveguide 121 in the curved waveguide structure 12, ensuring that the direction of the electric field aligns with the direction of the optical axis, and meeting the modulation requirements of the electro-optic modulator.

In this embodiment, in addition to the lithium niobate layer 1, the electrode arrangement 2, and the oxide layer 3, the Y-shaped thin-film lithium niobate electro-optic modulator provided further requires other basic layers to achieve its fundamental functions of the electro-optic modulator. Therefore, this embodiment further involves the following design:

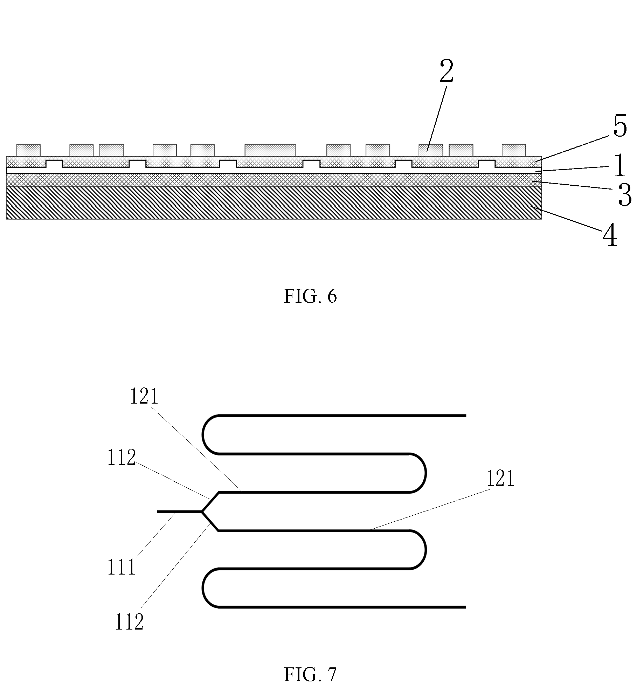

As shown in FIG. 6, the Y-shaped thin-film lithium niobate electro-optic modulator further comprises a substrate 4 and a buffer layer 5, wherein:
the substrate 4 is disposed beneath the oxide layer 3; and the buffer layer 5 is arranged between the lithium niobate layer 1 and the electrode arrangement 2.

In this embodiment, the substrate 4 may be a thin-film lithium niobate wafer substrate, and may be formed from silicon, lithium niobate, or quartz.

The oxide layer 3 may be formed from silicon dioxide or benzocyclobutene, and may have a thickness in the range of 0.5µm to 20µm.

The lithium niobate layer 1 may be formed from an X-cut lithium niobate film material, and the waveguide may have a thickness of 600nm. When etching the lithium niobate layer 1, the etching depth may be 300nm. It should be noted that in this embodiment, the lithium niobate layer 1 may alternatively be formed from materials such as silicon, silicon nitride, or lithium tantalate.

The buffer pool may be formed from silicon dioxide or benzocyclobutene, and may have a thickness in the range of 0.1µm to 1µm.

The electrode arrangement 2 may be formed from gold, copper, or tungsten, but is not limited to elemental metals.

In this embodiment, the first Y-shaped waveguide structure 11 serves as the input port for an input optical signal, and also transmits the optical signal to the two curved waveguide structures 12 on opposite sides, such that the optical signal can propagate throughout the entire waveguide structure. Therefore, this embodiment further includes the following design features:

As shown in FIG. 7, the first Y-shaped waveguide structure 11 comprises a first main waveguide 111 and two first branch waveguides 112, wherein:
the first main waveguide 111 is connected to the two first branch waveguides 112 respectively; one first branch waveguide 112 is connected to one curved waveguide structure 12, and the other first branch waveguide 112 is connected to the other curved waveguide structure 12.

In this embodiment, the first main waveguide 111 is used as an input port for optical signals, and both first branch waveguides 112 are connected to the first main waveguide 111. An input optical signal is simultaneously transmitted to the curved waveguide structures 12 on both sides via the two first branch waveguides 112, enabling simultaneous transmission over two optical paths with consistent height. The optical signal is transmitted to the curved waveguide structures 12 on opposite sides of the first Y-shaped waveguide structure 11, and is then output from the outermost straight waveguide 121 of the two curved waveguide structures 12.

Alternatively, the first Y-shaped waveguide structure 11 may serve as an output port for optical signal, such that an optical signal is input from the outermost straight waveguide 121 of the two curved waveguide structures 12, propagates through the curved waveguide structure 12, and is then input via the two first branch waveguides 112, respectively, and finally output from the first main waveguide 111.

In this embodiment, in order to reduce the space occupied by the waveguide while maintaining the waveguide length, and further reduce the size of the chip, the specific curved configuration of the waveguide is as follows:

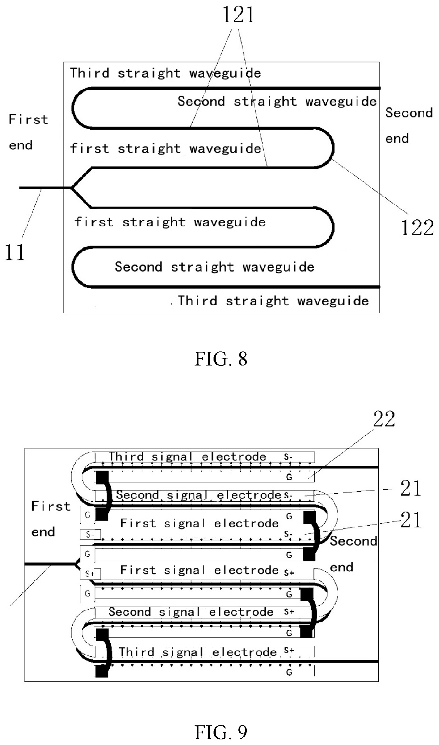

As shown in FIG. 8, adjacent straight waveguides 121 are connected end-to-end via the curved waveguides 122 to connect all straight waveguides 121 within the same curved waveguide structure 12 in series, wherein:
each curved waveguide structure 12 comprises a plurality of straight waveguides 121, which are sequentially numbered from a 1st to a j-th straight waveguide 121 based on their distance from the first Y-shaped waveguide structure 11, in an increasing order, where j>1 and j is an odd integer; and

As shown in FIG. 8, in this embodiment, due to the symmetrical arrangement and connection of the straight waveguides 121 on opposite sides of the first Y-shaped waveguide structure 11, only the straight waveguide 121 on one side of the first Y-shaped waveguide structure 11 will be described, and the straight waveguide 121 on the other side may be inferred by analogy. In this embodiment, the distances between the first to j-th straight waveguides 121 and the first Y-shaped waveguide structure 11 increases sequentially. It should be noted that only three straight waveguides 121 are depicted on one side of the first Y-shaped waveguide structure 11 in FIG. 8, which is merely an illustrative example and does not limit the number of straight waveguides 121 in other implementations.

It should be noted that, since the outermost two straight waveguides 121 of the two curved waveguide structures 12 are configured for optical signal output, these the outermost two straight waveguides 121 must face the end opposite to the first Y-shaped waveguide structure 11, i.e., the right end in FIG. 8. It can be seen that if the serial number of the outermost straight waveguide 121 is even, this straight waveguide 121 would face the left end in FIG. 8, which does not meet the requirements. Therefore, the serial number of the outermost straight waveguide 121 should be an odd number other than 1, such that the number of straight waveguides 121 in the curved waveguide structure 12 is odd. A layout connection method suitable for this scenario is shown in FIG. 8.

As shown in FIG. 8, for the first straight waveguide 121, the first end is connected to the first Y-shaped waveguide structure 11, and the second end is connected to the second straight waveguide 121 via a curved waveguide 122.

As shown in FIG. 8, for the j-th straight waveguide 121, the first end is connected to the (j-1)-th straight waveguide 121 via a curved waveguide 122, and the second end is configured for outputting optical signals.

For straight waveguides 121 other than the first straight waveguide 121 and the j-th straight waveguide 121, both ends are connected to adjacent straight waveguides 121 via the curved waveguides 122. The specific connection method is as follows:
for the i-th straight waveguide 121, where i is a positive integer satisfying 1<i<j, and i increases sequentially with increasing distance from the first Y-shaped waveguide structure 11, specifically:

As shown in FIG. 8, when i is an odd integer, the first end of the i-th straight waveguide 121 is connected to the (i-1)-th straight waveguide 121 via a curved waveguide 122, and the second end of the i-th straight waveguide 121 is connected to the (i+1)-th straight waveguide 121 via a curved waveguide 122.

As shown in FIG. 8, when i is an even integer, the first end of the i-th straight waveguide 121 is connected to the (i+1)-th straight waveguide 121 via a curved waveguide 122, and the second end of the i-th straight waveguide 121 is connected to the (i-1)-th straight waveguide 121 via a curved waveguide 122.

As shown in FIG. 8, in this embodiment, the first end faces the side where the first Y-shaped waveguide structure 11 is located, and the second end faces the opposite position of the first Y-shaped waveguide structure 11.

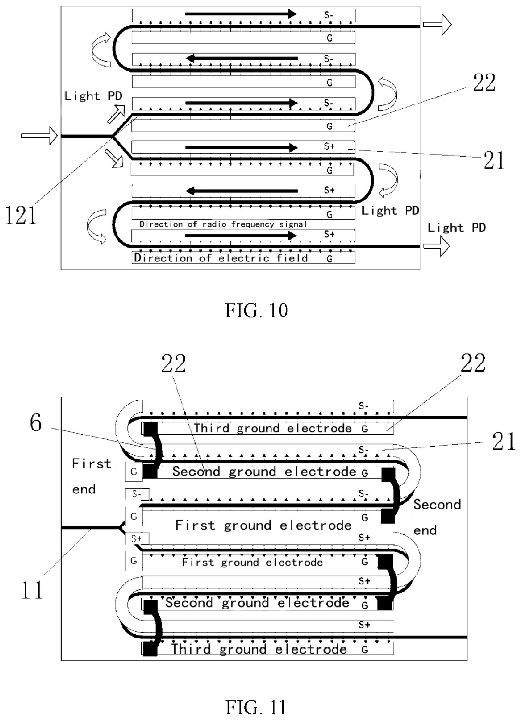

By employing the above connection method, the two curved waveguide structures 12 are arranged in a folded configuration, enabling the corresponding optical signal transmission as shown in FIG. 10, where the large white arrow represents the transmission path of the optical signal in the curved waveguide structure 12 when input from the first Y-shaped waveguide structure 11.

Furthermore, in order to achieve high-bandwidth modulation performance, this embodiment also requires corresponding distribution configuration of the signal electrodes 21 and ground electrodes 22 to ensure that the transmission direction of electrical signal in the signal electrode 21 is consistent with the direction of optical signal transmission, and to achieve matching between the microwave phase velocity and the optical group velocity, thereby achieving high-bandwidth modulation performance. Therefore, this embodiment further provides a preferred solution as follows:

The lithium niobate layer 1 is disposed on the oxide layer 3; the lithium niobate layer 1 comprises a first Y-shaped waveguide structure 11 and two curved waveguide structures 12, the two curved waveguide structures 12 being symmetrically arranged on opposite sides of the first Y-shaped waveguide structure 11 and connected thereto; the curved waveguide structure 12 comprises a plurality of straight waveguides 121 and a plurality of curved waveguides 122; the plurality of straight waveguides 121 are arranged parallel to one another, and adjacent straight waveguides 121 are connected end-to-end via the curved waveguides 122 to form a continuous series connection of all straight waveguides 121 within the same curved waveguide structure 12; the signal electrodes 21 are located on the lithium niobate layer 1, and are disposed at each side of each straight waveguide 121, and the path direction of all signal electrodes 21 is consistent with the path direction of the curved waveguide structure 12, thereby ensuring that the direction of electrical signal propagation in the signal electrode 21 is consistent with the direction of optical signal propagation in the curved waveguide structure 12.

As shown in FIG. 9, all signal electrodes 21 are divided into two sets disposed on opposite sides of the first Y-shaped waveguide structure 11, each set comprising a plurality of signal electrodes numbered sequentially from a first signal electrode 21 to a j-th signal electrode 21 based on their distance from the first Y-shaped waveguide structure 11, where j>1 and j is an odd integer. Here, j is equal to the number of straight waveguides 121 included in the curved waveguide structure 12.

In this embodiment, since each straight waveguide 121 in the two curved waveguide structures 12 is provided with a signal electrode 21 and a ground electrode 22 on opposite sides, all signal electrodes 21 are symmetrically distributed on opposite sides relative to the first Y-shaped waveguide structure 11, consistent with arrangement of the straight waveguide 121; accordingly, in this embodiment, only the signal electrode 21 on one side of the first Y-shaped waveguide structure 11 will be described, and the signal electrode 21 on the other side may be inferred by analogy. In this embodiment, the distance between the first to j-th signal electrodes 21 and the first Y-shaped waveguide structure 11 increases sequentially. It should be noted that only three signal electrodes 21 are depicted on one side of the first Y-shaped waveguide structure 11 in FIG. 9, which is merely an illustrative example and does not limit the number of signal electrodes 21 in other implementations.

It should be noted that in this embodiment, an individual signal electrode 21 refers to a segment of the strip-shaped signal electrode 21 shown in FIG. 9, while the curved connecting electrode segments do not affect the electro-optic modulation, and thus, in this embodiment, the term "individual signal electrode 21" refers only to the strip-shaped signal electrode segment.

As shown in FIG. 9, for the first signal electrode 21, the first end is configured to receive electrical signals, and the second end is connected to the second signal electrode 21.

For the j-th signal electrode 21, the first end is connected to the (j-1)-th signal electrode 21; the second end is configured for outputting electrical signals.

For signal electrodes 21 other than the first signal electrode 21 and the j-th signal electrode 21, both ends are connected to adjacent signal electrodes 21 via curved electrodes. The specific connection method mentioned above is as follows:
for the i-th signal electrode 21, where i is a positive integer satisfying 1<i<j, and i increases sequentially with increasing distance from the first Y-shaped waveguide structure 11, specifically:
when i is an odd integer, the first end is connected to the (i-1)-th signal electrode 21, and the second end is connected to the (i+1)-th signal electrode 21; and
when i is an even integer, the first end is connected to the (i+1)-th signal electrode 21, and the second end is connected to the (i-1)-th signal electrode 21.

As shown in FIG. 9, it should be noted that when connecting different signal electrodes 21, the connections may be formed by bending or using right-angle corners; by arranging the signal electrodes 21 as described above, an electrical signal is input from the first end of the first signal electrode 21. As shown in FIG. 10, the long black arrow in FIG. 10 represents the transmission path of the electrical signal in the signal electrode 21, and the final electrical signal is ultimately output from the outermost two signal electrodes 21, thereby ensuring that the propagation direction (PD) of optical signals is consistent with that of the radio frequency signals (i.e. electrical signals).

In this embodiment, the ground electrode 22 must also be arranged in conjunction with the signal electrodes 21 to generate the corresponding electric field. Therefore, this embodiment further includes the following design features:

As shown in FIG. 11, all ground electrodes 22 are divided into two sets disposed on opposite sides of the first Y-shaped waveguide structure 11, each set being sequentially numbered from a first ground electrode 22 to a j-th ground electrode 22 based on their distance from the first Y-shaped waveguide structure 11, where j>1 and j is an odd integer.

In this embodiment, since each straight waveguide 121 in the two curved waveguide structures 12 is provided with a signal electrode 21 and a ground electrode 22 on opposite sides, all ground electrodes 22 are symmetrically distributed on opposite sides relative to the first Y-shaped waveguide structure 11, consistent with arrangement of the straight waveguide 121, and thus, in this embodiment, only the ground electrode 22 on one side of the first Y-shaped waveguide structure 11 will be described, and the ground electrode 22 on the other side may be inferred by analogy. In this embodiment, the distance between the first to j-th ground electrodes 22 and the first Y-shaped waveguide structure 11 increases sequentially. It should be noted that only three ground electrodes 22 are depicted on one side of the first Y-shaped waveguide structure 11 in FIG. 11, which is merely an illustratively example and does not limit the number of ground electrodes 22 in other implementations.

Adjacent ground electrodes 22 are connected via connectors 6. Moreover, for a ground electrode 22 connected to two connectors 6, the two connectors 6 are disposed at opposite ends of the corresponding ground electrode 22. The specific connection method mentioned above is as follows:

As shown in FIG. 11, for the first ground electrode 22, the second end is connected to the second ground electrode 22 via a connector 6.

For the j-th ground electrode 22, the first end is connected to the (j-1)-th ground electrode 22 via a connector 6.

For the i-th ground electrode 22, where i is a positive integer satisfying 1<i<j, and i increases sequentially with increasing distances from the first Y-shaped waveguide structure 11, specifically:
when i is an odd integer, the first end of the i-th ground electrode 22 is connected to the (i-1)-th ground electrode 22 via a connector 6, and the second end of the i-th ground electrode 22 is connected to the (i+1)-th ground electrode 22 via a connector 6.
when i is an even integer, the first end of the i-th ground electrode 22 is connected to the (i+1)-th ground electrode 22 via a connector 6, and the second end of the i-th ground electrode 22 is connected to the (i-1)-th ground electrode 22 via a connector 6.

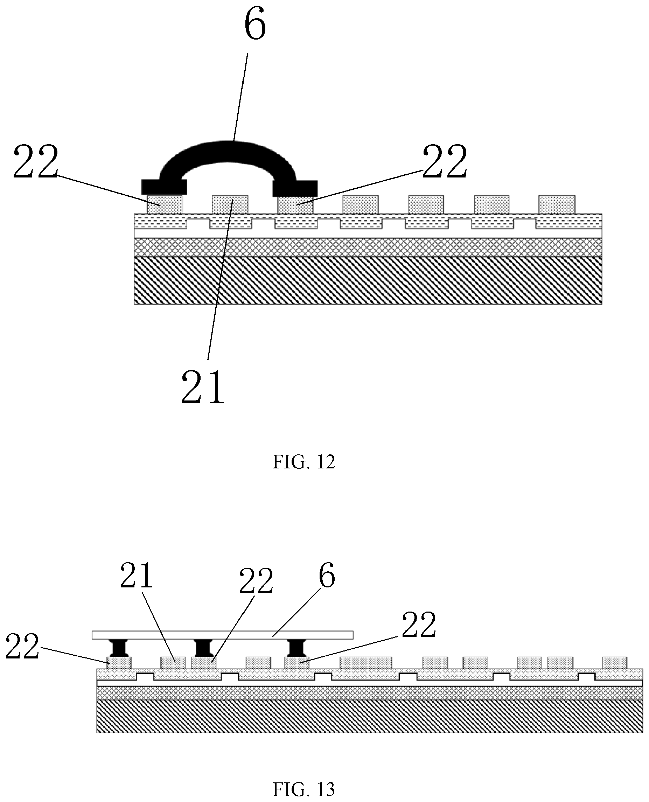

As shown in Figures 11-13, it should be noted that in this embodiment, each ground electrode 22 is in the form of a strip, and the connector 6 may be formed using gold wire bonding, metal bridging, or flip chip soldering. As shown in Figures 12 and 13, the connectors 6 are routed over the signal electrode 21 to avoid short-circuiting between the signal electrode 21 and the ground electrode 22.

### Embodiment 2

Embodiment 2 of the present application provides a further Y-shaped thin-film lithium niobate electro-optic modulator based on Embodiment 1, wherein the electro-optic modulator employs a Mach-Zehnder interferometer modulation structure. Specifically, as compared to Embodiment 1, a waveguide structure is disposed at a position opposite to the first Y-shaped waveguide structure 11 for optical signal input, while the original first Y-shaped waveguide structure 11 is configured for optical signal output. The structure is described as follows:

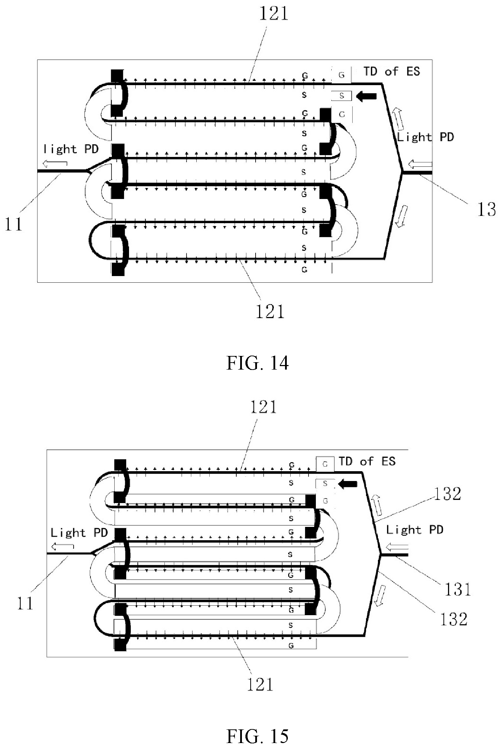

As shown in Figures 14 and 15, the lithium niobate layer 1 further comprises a second Y-shaped waveguide structure 13, which is arranged opposite to the first Y-shaped waveguide structure 11. The second Y-shaped waveguide structure 13 includes a second main waveguide 131 and two second branch waveguides 132, where:
the second main waveguide 131 is connected to each of the two second branch waveguides 132; one second branch waveguide 132 is connected to one outermost straight waveguide 121, and the other second branch waveguide 132 is connected to the other outermost straight waveguide 121.

As shown in Figures 14 and 15, in this embodiment, an optical signal may be input via the second Y-shaped waveguide structure 13. After passing through the two curved waveguide structures 12, the optical signal propagates towards the first Y-shaped waveguide structure 11 and is output through the first Y-shaped waveguide structure 11.

As compared to Embodiment 1, in this embodiment, due to change of the propagation direction of the optical signal, the signal electrodes 21 and the ground electrodes 22 need to be rearranged. After arranging the signal electrode 21 and the ground electrode 22 in parallel on opposite sides of each straight waveguide 121, the various signal electrodes 21 need to be interconnected, and it is necessary to ensure the propagation direction of the electrical signal in the signal electrode 21 is consistent with that of the optical signal in the waveguide. Therefore, this embodiment further includes the following design:

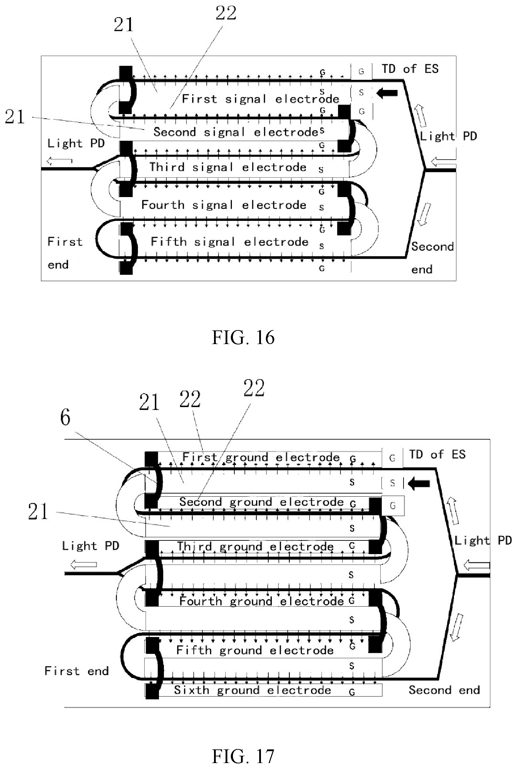

As shown in FIG. 16, the signal electrodes 21 specifically includes the first signal electrode 21 to the (2i-1)-th signal electrode 21, where j>1 and j is an odd integer.

In this embodiment, since the optical signal propagates from the waveguides on outer sides towards the central waveguide, all signal electrodes 21 are connected in series, and it is necessary to ensure that the transmission direction of electrical signal (TD of ES) is consistent with the transmission direction of optical signal to achieve high-bandwidth modulation performance. As shown in FIG. 16, in this embodiment, j represents the number of straight waveguides 121 on either side of the first Y-shaped waveguide structure 11 in Embodiment 1. Since all signal electrodes 21 are connected in series in this embodiment, to ensure consistency between the transmission direction of electrical signal and the transmission direction of optical signal, the number of signal electrodes 21 in this embodiment is 2j-1. All signal electrodes 21 are arranged in the order from the first to (2j-1)-th signal electrodes 21.

As shown in FIG. 16, for the first signal electrode 21, the second end is configured for electrical signal input, and the first end is connected to the second signal electrode 21.

For the (2j-1)-th signal electrode 21, the first end is configured for electrical signal output, and the second end of the (2j-1)-th signal electrode 21 is connected to the (2j-2)-th signal electrode 21.

For signal electrodes 21 other than the first signal electrode 21 and the (2j-1)-th signal electrode 21, both ends of each signal electrode 21 are connected to adjacent signal electrodes 21 via curved electrodes. The specific connection method mentioned above is as follows:
for the h-th signal electrode 21, where h is a positive integer satisfying 1<h<2j-1, and h increases sequentially in an arrangement order of the signal electrodes 21, specifically:
when h is an odd integer, the first end of the h-th signal electrode 21 is connected to the (h+1)-th signal electrode 21, and the second end of the h-th signal electrode 21 is connected to the (h-1)-th signal electrode 21.

When h is an even integer, the first end of the h-th signal electrode 21 is connected to the (h-1)-th signal electrode 21, and the second end of the h-th signal electrode 21 is connected to the (h+1)-th signal electrode 21.

As shown in FIG. 16, the above-described arrangement of the signal electrodes 21 may ensure that the transmission direction of the optical signal in each straight waveguide 121 is aligned with the transmission direction of the electrical signal in its corresponding signal electrode 21. In FIG. 16, an electrical signal is input from the second end of the topmost signal electrode 21, and the direction of the thick black arrow in the figure indicates the transmission direction of the electrical signal. Finally, the electrical signal is output from the first end of the bottommost signal electrode 21 in the figure. As can be seen from FIG. 16, the transmission direction of the electrical signal in the signal electrode 21 is consistent with the transmission direction of the optical signal in the waveguide at the corresponding position, thereby achieving high-bandwidth modulation performance with the Mach-Zehnder interferometer modulation structure.

In this embodiment, the ground electrodes 22 also need to be arranged in a corresponding manner to match the signal electrodes 21, so this embodiment further includes the following design:

As shown in FIG. 17, all the ground electrodes 22 specifically include the first ground electrode 22 to the 2j-th ground electrode 22, where j>1 and j is an odd integer.

In this embodiment, in order to ensure alignment between the transmission direction of electrical signal and the transmission direction of optical signal, the number of ground electrodes 22 is 2j, which are numbered sequentially from the first to 2j-th ground electrodes 22.

As shown in FIG. 17, for the first ground electrode 22, the first end is connected to the second ground electrode 22 via a connector 6.

For the 2j-th ground electrode 22, the first end is connected to the (2j-1)-th ground electrode 22 via a connector 6.

For ground electrodes 22 other than the first ground electrode 22 and the 2j-th ground electrode 22, both ends of each ground electrode 22 are connected to adjacent connectors 6 via connectors 6. The specific connection method mentioned above is as follows:
for the k-th ground electrode 22, where k is a positive integer satisfying 1<k<2j, and k increases sequentially in an arrangement order of all the ground electrodes 22, specifically:
when k is an odd integer, the first end of the k-th ground electrode 22 is connected to the (k+1)-th ground electrode 22 via a connector 6, and the second end of the k-th ground electrode 22 is connected to the (k-1)-th ground electrode 22 via a connector 6.

When k is an even integer, the first end of the k-th ground electrode 22 is connected to the (k-1)-th ground electrode 22 via a connector 6, and the second end of the k-th ground electrode 22 is connected to the (k+1)-th ground electrode 22 via a connector 6.

As shown in FIG. 17, in this embodiment, each ground electrode 22 is in the form of a strip, and the connectors 6 may be connected using gold wire bonding, metal bridging, or flip-chip soldering. As shown in Figures 12 and 13, each connector 6 is routed over the signal electrode 21 to avoid short-circuiting between the signal electrode 21 and the ground electrode 22.

### Embodiment 3

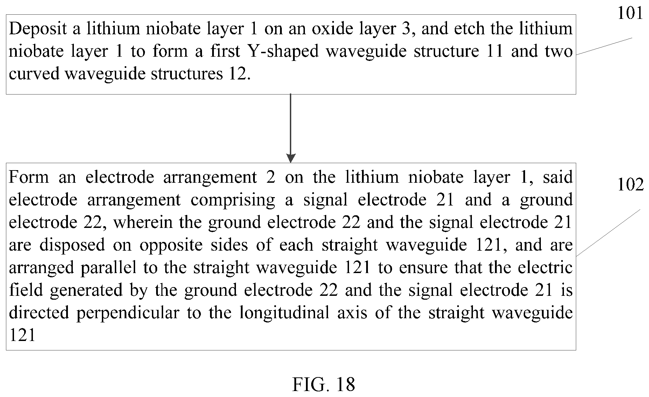

Building on Embodiments 1 and 2, Embodiment 3 of the present application provides a method for manufacturing a Y-shaped thin-film lithium niobate electro-optic modulator, said method being applied to the Y-shaped thin-film lithium niobate electro-optic modulators described in Embodiments 1 and 2. As illustrated in FIG. 18, the method comprises the steps of:
Step 101: depositing a lithium niobate layer 1 on an oxide layer 3, and etching the lithium niobate layer 1 to form a first Y-shaped waveguide structure 11 and two curved waveguide structures 12.

The two curved waveguide structures 12 are symmetrically disposed on opposite sides of and connected to, the first Y-shaped waveguide structure 11; each curved waveguide structure 12 comprises a plurality of straight waveguides 121 and a plurality of curved waveguides 122, wherein the plurality of straight waveguides 121 are arranged parallel to one another, and adjacent straight waveguides 121 are connected end-to-end via the curved waveguides 122 to form a continuous series connections of all straight waveguides 121 within the same curved waveguide structure 12.

Step 102: forming an electrode arrangement 2 on the lithium niobate layer 1, said electrode arrangement comprising a signal electrode 21 and a ground electrode 22, wherein the ground electrode 22 and the signal electrode 21 are disposed on opposite sides of each straight waveguide 121, and are arranged parallel to the straight waveguide 121 to ensure that the electric field generated by the ground electrode 22 and the signal electrode 21 is directed perpendicular to the longitudinal axis of the straight waveguide 121.

Regarding the specific structure of the Y-shaped thin-film lithium niobate electro-optic modulator, please refer to the previous embodiments and will not be repeated here.

The above descriptions are only preferred embodiments of the present application and not intended to limit the present application. Any modifications, equivalent substitutions, and improvements made within the spirit and principles of the present application should be included within the scope of protection of the present application.

## Claims

1. A Y-shaped thin-film lithium niobate electro-optic modulator, **characterized in** comprising: a lithium niobate layer (1), an electrode arrangement (2), and an oxide layer (3), wherein:
the lithium niobate layer (1) is disposed on the oxide layer (3);
the lithium niobate layer (1) comprises a first Y-shaped waveguide structure (11) and two curved waveguide structures (12), the two curved waveguide structures (12) being symmetrically disposed on opposite sides of the first Y-shaped waveguide structure (11) and connected thereto;
each curved waveguide structure (12) comprises a plurality of straight waveguides (121) and a plurality of curved waveguides (122), wherein the plurality of straight waveguides (121) are arranged parallel to one another, and adjacent straight waveguides (121) are connected end-to-end via the curved waveguides (122) to form a continuous series connection of all straight waveguides (121) within the same curved waveguide structure (12);
the electrode arrangement (2) is located on the lithium niobate layer (1), and comprises signal electrodes (21) and ground electrodes (22), each ground electrode (22) and each signal electrode (21) being disposed on opposite sides of each straight waveguide (121) and arranged parallel to the straight waveguide (121), such that a direction of an electric field generated by the ground electrode (22) and the signal electrode (21) is perpendicular to a longitudinal the straight waveguide (121).

2. The Y-shaped thin-film lithium niobate electro-optic modulator of claim 1, wherein the lithium niobate layer (1) is deposited on the oxide layer (3) and then etched to form ridge waveguides to obtain the first Y-shaped waveguide structure (11) and the two curved waveguide structures (12), the first Y-shaped waveguide structure (11) being disposed on a left side, and the curved waveguide structures (12) being symmetrically arranged on opposite sides of the first Y-shaped waveguide structure (11) and connected thereto;
the first Y-shaped waveguide structure (11) is configured for optical signal input, an optical signal being transmitted to the two curved waveguide structures (12) via the first Y-shaped waveguide structure (11), and propagating outward via the two curved waveguide structures (12), such that two optical paths have a consistent height.

3. The Y-shaped thin-film lithium niobate electro-optic modulator of claim 1, wherein the electrode arrangement (2) is deposited on the etched lithium niobate layer (1) and the oxide layer (3), and then etched to form the signal electrode (21) and the ground electrode (22), each straight waveguide (121) is provided with a strip-shaped signal electrode (21) and a strip-shaped ground electrode (22) on opposite sides, the signal electrode (21) and the ground electrode (22) being parallel to the straight waveguide (121), the signal electrode (21) and the ground electrode (22) on opposite sides of each straight waveguide (121) generates a corresponding electric field, a direction of which is perpendicular to longitudinal axes of the signal electrode (21) and the ground electrode (22), and also perpendicular to a longitudinal axis of the straight waveguide (121).

4. The Y-shaped thin-film lithium niobate electro-optic modulator of claim 1, further comprising a substrate (4) and a buffer layer (5), wherein:
the substrate (4) is disposed beneath the oxide layer (3); and
the buffer layer (5) is interposed between the lithium niobate layer (1) and the electrode arrangement (2).

5. The Y-shaped thin-film lithium niobate electro-optic modulator of claim 4, wherein the substrate (4) is a thin-film lithium niobate wafer substrate and is formed from silicon, lithium niobate, or quartz; the oxide layer (3) is formed from silicon dioxide or benzocyclobutene, and has a thickness of 0.5µm to 20µm; the lithium niobate layer (1) is formed from X-cut lithium niobate film material, and has a waveguide thickness of 600nm, with an etching depth of 300nm when etching the lithium niobate layer (1); the buffer layer is formed from silicon dioxide or benzocyclobutene, and has a thickness of 0.1µm to 1µm; and the electrode arrangement (2) is formed from gold, copper, or tungsten.

6. The Y-shaped thin-film lithium niobate electro-optic modulator of claim 1, wherein the first Y-shaped waveguide structure (11) comprises a first main waveguide (111) and two first branch waveguides (112), wherein:
the first main waveguide (111) is connected with the two first branch waveguides (112);
one of the first branch waveguides (112) is connected to one of the curved waveguide structures (12), and the other first branch waveguide (112) is connected to the other curved waveguide structure (12).

7. The Y-shaped thin-film lithium niobate electro-optic modulator of claim 6, wherein the first main waveguide (111) is configured as an input port for optical signals, and both first branch waveguides (112) are connected to the first main waveguide (111); input optical signals are simultaneously transmitted through the two first branch waveguides (112) to the curved waveguide structures (12) on opposite sides, achieving simultaneous transmission of two optical paths and consistent height of an optical path; the optical signals are transmitted to the curved waveguide structures (12) on opposite sides of the first Y-shaped waveguide structure (11), and then output from the outermost straight waveguide (121) of the two curved waveguide structures (12).

8. The Y-shaped thin-film lithium niobate electro-optic modulator of claim 6, wherein the first Y-shaped waveguide structure (11) is configured as an output port for optical signal; an optical signal is input from the outermost straight waveguide (121) of each of the two curved waveguide structures (12), propagates through the respective curved waveguide structure (12), and then input through the two first branch waveguides (112) respectively, and is output from the first main waveguide (111).

9. The Y-shaped thin-film lithium niobate electro-optic modulator of claim 1, wherein the feature that adjacent straight waveguides (121) are connected end-to-end via curved waveguides (122) to form a continuous series connection of all straight waveguides (121) within the same curved waveguide structure (12), specifically comprises:
each curved waveguide structure (12) comprises a plurality of straight waveguides (121), numbered sequentially from a first straight waveguide (121) to a j-th straight waveguide (121), based on their distance from the first Y-shaped waveguide structure (11), where j>1 and j is an odd integer;
for the first straight waveguide (121), a first end is connected to the first Y-shaped waveguide structure (11), and a second end is connected to the second straight waveguide (121) via a curved waveguide (122);
for the j-th straight waveguide (121), a first end is connected to the (j-1)-th straight waveguide (121) via a curved waveguide (122), and a second end is configured for optical signal output;
for straight waveguides (121) other than the first straight waveguide (121) and the j-th straight waveguide (121), both ends are connected to adjacent straight waveguides (121) via curved waveguides (122).

10. The Y-shaped thin-film lithium niobate electro-optic modulator of claim 9, wherein for the i-th straight waveguide (121), where i is a positive integer satisfying 1<i<j, and i increases sequentially with increasing distance from the first Y-shaped waveguide structure (11), specifically:
when i is an odd integer, the first end of the i-th straight waveguide (121) is connected to the (i-1)-th straight waveguide (121) via a curved waveguide (122), and the second end of the i-th straight waveguide (121) is connected to the (i+1)-th straight waveguide (121) via a curved waveguide (122);
when i is an even integer, the first end of the i-th straight waveguide (121) is connected to the (i+1)-th straight waveguide (121) via a curved waveguide (122), and the second end of the i-th straight waveguide (121) is connected to the (i-1)-th straight waveguide (121) via a curved waveguide (122);
the first end faces a side where the first Y-shaped waveguide structure (11) is located, and the second end faces an opposite position to the first Y-shaped waveguide structure (11).

11. The Y-shaped thin-film lithium niobate electro-optic modulator of claim 10, wherein the lithium niobate layer (1) is disposed on the oxide layer (3); the lithium niobate layer (1) comprises a first Y-shaped waveguide structure (11) and two curved waveguide structures (12), the two curved waveguide structures (12) being symmetrically arranged on opposite sides of the first Y-shaped waveguide structure (11) and connected thereto; each curved waveguide structure (12) comprises a plurality of straight waveguides (121) and a plurality of curved waveguides (122), the plurality of straight waveguides (121) being arranged parallel to one another, and adjacent straight waveguides (121) being connected end-to-end via the curved waveguides (122) to form a continuous series connection of all straight waveguides (121) within the same curved waveguide structure (12); the signal electrodes (21) are located on the lithium niobate layer (1), and are disposed on one side of each straight waveguide (121), a path direction of all the signal electrodes (21) being consistent with a path direction of the curved waveguide structure (12), ensuring that a propagation direction of the electrical signal in each signal electrode (21) is consistent with a propagation direction of the optical signal in the curved waveguide structure (12).

12. The Y-shaped thin-film lithium niobate electro-optic modulator of claim 1, wherein all the signal electrodes (21) are divided into two sets disposed on both sides of the first Y-shaped waveguide structure (11); each set of signal electrodes (21) is numbered sequentially from a first signal electrode (21) to a j-th signal electrode (21) based on their distance from the first Y-shaped waveguide structure (11), where j>1 and j is an odd integer;
for the first signal electrode (21), a first end is configured to receive electrical signals, and a second end is connected to the second signal electrode (21);
for the j-th signal electrode (21), a first end is connected to the (j-1)-th signal electrode (21), and a second end is configured for outputting electrical signals;
for signal electrodes (21) other than the first signal electrode (21) and the j-th signal electrode (21), both ends are connected to adjacent signal electrodes (21) via curved electrodes.

13. The Y-shaped thin-film lithium niobate electro-optic modulator of claim 12, wherein for the i-th signal electrode (21), where i is a positive integer satisfying 1<i<j, and i increases sequentially with increasing distance from the first Y-shaped waveguide structure (11), specifically:
when i is an odd integer, the first end of the i-th signal electrode (21) is connected to the (i-1)-th signal electrode (21), and the second end of the i-th signal electrode (21) is connected to the (i+1)-th signal electrode (21);
when i is an even integer, the first end of the i-th signal electrode (21) is connected to the (i+1)-th signal electrode (21), and the second end of the i-th signal electrode (21) is connected to the (i-1)-th signal electrode (21).

14. The Y-shaped thin-film lithium niobate electro-optic modulator of claim 12, wherein all the ground electrodes (22) are divided into two sets disposed on both sides of the first Y-shaped waveguide structure (11); each set of the ground electrodes (22) is numbered sequentially from a first ground electrode (22) to the j-th ground electrode (22) based on their distance from the first Y-shaped waveguide structure (11), where j>1 and j is an odd integer;
adjacent ground electrodes (22) are interconnected via connectors (6); and for the ground electrode (22) connected to two connectors (6), the two connectors (6) are distributed at both ends of the corresponding ground electrode (22).

15. The Y-shaped thin-film lithium niobate electro-optic modulator of claim 14, wherein, for the first ground electrode (22), a second end is connected to the second ground electrode (22) via a connector (6);
for the j-th ground electrode (22), a first end is connected to the (j-1)-th ground electrode (22) via a connector (6);
for the i-th ground electrode (22), where i is a positive integer satisfying 1<i<j, and i increases sequentially with their distance from the first Y-shaped waveguide structure (11), specifically:
when i is an odd integer, the first end of the i-th ground electrode (22) is connected to the (i-1)-th ground electrode (22) via a connector (6), and the second end of the i-th ground electrode (22) is connected to the (i+1)-th ground electrode (22) via a connector (6);
when i is an even integer, the first end of the i-th ground electrode (22) is connected to the (i+1)-th ground electrode (22) via a connector (6), and the second end of the i-th ground electrode (22) is connected to the (i-1)-th ground electrode (22) via a connector (6).

16. The Y-shaped thin-film lithium niobate electro-optic modulator of claim 1, wherein the lithium niobate layer (1) further comprises a second Y-shaped waveguide structure (13), disposed opposite to the first Y-shaped waveguide structure (11), and comprising a second main waveguide (131) and two second branch waveguides (132), wherein:
the second main waveguide (131) is connected with the two second branch waveguides (132), respectively; and
one of the second branch waveguides (132) is connected to one of the outermost straight waveguides (121), and the other second branch waveguide (132) is connected to the other outermost straight waveguide (121).

17. The Y-shaped thin-film lithium niobate electro-optic modulator of claim 16, wherein all the signal electrodes (21) are numbered sequentially from a first signal electrode (21) to a (2j-1)-th signal electrode (21), where j>1 and j is an odd integer;
for the first signal electrode (21), a second end is configured for electrical signal input, and a first end is connected to the second signal electrode (21);
for the (2j-1)-th signal electrode (21), a first end is configured for electrical signal output, and the second end is connected to the (2j-2)-th signal electrode (21);
for signal electrodes (21) other than the first signal electrode (21) and the (2j-1)-th signal electrode (21), both ends are connected to adjacent signal electrodes (21) via curved electrodes.

18. The Y-shaped thin-film lithium niobate electro-optic modulator of claim 17, wherein for the h-th signal electrode (21), where h is a positive integer satisfying 1<h<2j-1, and h increases sequentially in an arrangement order of all the signal electrodes (21), specifically:
when h is an odd integer, the first end is connected to the (h+1)-th signal electrode (21), and the second end is connected to the (h-1)-th signal electrode (21);
when h is an even integer, the first end is connected to the (h-1)-th signal electrode (21), and the second end is connected to the (h+1)-th signal electrode (21).

19. The Y-shaped thin-film lithium niobate electro-optic modulator of claim 18, wherein all the ground electrodes (22) are numbered sequentially from a first ground electrode (22) to a 2j-th ground electrode (22), where j>1 and j is an odd integer;
for the first ground electrode (22), a first end is connected to the second ground electrode (22) via a connector (6);
for the 2j-th ground electrode (22), a first end is connected to the (2i-1)-th ground electrode (22) via a connector (6);
for ground electrodes (22) other than the first ground electrode (22) and the 2j-th ground electrode (22), both ends are connected to adjacent connectors (6) via connectors (6).

20. The Y-shaped thin-film lithium niobate electro-optic modulator of claim 19, wherein for the k-th ground electrode (22), where k is a positive integer satisfying 1<k<2j, and k increases sequentially in an arrangement order of all the ground electrodes (22), specifically:
when k is an odd integer, a first end is connected to the (k+1)-th ground electrode (22) via a connector (6), and a second end is connected to the (k-1)-th ground electrode (22) via a connector (6);
when k is an even integer, a first end is connected to the (k-1)-th ground electrode (22) via a connector (6), and a second end is connected to the (k+1)-th ground electrode (22) via a connector (6).

21. A method for manufacturing a Y-shaped thin-film lithium niobate electro-optic modulator, applied to the Y-shaped thin-film lithium niobate electro-optic modulator as claimed in any one of claims 1-20, comprising:
depositing the lithium niobate layer (1) on the oxide layer (3), and etching the lithium niobate layer (1) to form a first Y-shaped waveguide structure (11) and two curved waveguide structures (12), the two curved waveguide structures (12) being symmetrically arranged on opposite sides of the first Y-shaped waveguide structure (11) and connected thereto; each curved waveguide structure (12) comprising a plurality of straight waveguides (121) and a plurality of curved waveguides (122), the plurality of straight waveguides (121) being arranged parallel to one another, and adjacent straight waveguides (121) being connected end-to-end via the curved waveguides (122) to form a continuous series connection of all straight waveguides (121) within the same curved waveguide structure (12);
disposing an electrode arrangement (2) on the lithium niobate layer (1), the electrode arrangement (2) comprising signal electrodes (21) and ground electrodes (22), each ground electrode (22) and each signal electrode (21) being disposed on opposite sides of each straight waveguide (121) and parallel to the straight waveguide (121), ensuring that a direction of an electric field generated by the ground electrode (22) and the signal electrode (21) is perpendicular to a longitudinal axis of the straight waveguide (121).
